# EUROPÄISCHE PATENTSCHRIFT

(11) **EP 2 540 781 B1**
(45) Veröffentlichungstag und Bekanntmachung des Hinweises auf die Patenterteilung: **30.11.2016**
(21) Anmeldenummer: 11171942.3
(22) Anmeldetag: 29.06.2011
(51) Int. Cl.: C09D 7/12, F16B 15/00, F16B 33/06

(54) **BEFESTIGUNGSMITTEL MIT FÜLLKÖRPERHALTIGER BESCHICHTUNG**
MEANS OF FIXING WITH COATING CONTAINING CONTAINERS
MOYEN DE FIXATION DOTÉ D'UN REVÊTEMENT CONTENANT UN CORPS DE REMPLISSAGE

(43) Veröffentlichungstag der Anmeldung: 02.01.2013
(73) Patentinhaber: Raimund Beck Nageltechnik GmbH, 5270 Mauerkirchen (AT)
(72) Erfinder: Siemers, Stefan, 8449 Burghausen (DE)
(74) Vertreter: Albrecht, Ralf

(56) Entgegenhaltungen:
- EP-A2- 1 493 930
- EP-A2- 1 959 152
- WO-A2-2007/145833
- DE-A1- 2 247 468
- DE-T2- 69 422 797
- US-A- 4 692 988

## Beschreibung

Die vorliegende Erfindung betrifft ein Befestigungsmittel, ausgewählt aus einem Nagel oder einer Nagelschraube, wobei das Befestigungsmittel mit einer Beschichtungszusammensetzung enthaltend ein polymeres Bindemittel zumindest teilweise beschichtet ist. Die Erfindung betrifft weiterhin eine Beschichtungszusammensetzung zur Ausrüstung eines Befestigungsmittels sowie darüber hinaus die Verwendung der erfindungsgemäßen Beschichtungszusammensetzung.

Für die Verbindung von Bauteilen, insbesondere solcher aus Holz, werden seit Menschengedenken Befestigungsmittel in Form von Nägeln eingesetzt. Diese Nägel bestehen beispielsweise aus Holz oder aus metallischen Werkstoffen und werden an den gewünschten Verbindungspunkten durch die zu verbindenden Materialien hindurchgetrieben. Diese Art der Verbindung ist verhältnismäßig schnell und ohne komplizierte Werkzeuge herzustellen. Allerdings ist die Haltbarkeit nicht in jedem Falle zufriedenstellend. Insbesondere bei der Verbindung solcher Holzbauteile, die der Witterung ausgesetzt sind wodurch das Holz ständig "arbeitet", können sich die Nägel mit der Zeit lösen. Die Verbindung besitzt dann häufig nicht mehr die geforderte Festigkeit.

Um diesem Problem entgegenzutreten, wurden in der Vergangenheit Beschichtungen für Nägel, profilierten Nägeln, Nagelschrauben bzw. Schrauben entwickelt, welche die Ausziehwerte dieser Befestigungselemente erhöhen und damit die Haltbarkeit einer mit solchen Befestigungselementen erstellten Verbindung verbessern.

Eine Beschichtungszusammensetzung der eingangs genannten Art ist aus dem Stand der Technik bekannt. So offenbart die DE 2 201 496 A1 ein Metall-Befestigungselement mit einem harten, glatten Überzug sowie ein Verfahren zur Herstellung eines solchen Befestigungselementes und eine Überzugsmasse, die insbesondere zum Beschichten von Nägeln vorgesehen ist. Die Überzugsmasse besteht aus einer Kombination von zwei thermoplastischen Harzen, von denen eines ein Carboxylgruppen enthaltendes Ethylenco- bzw. terpolymer sowie ein Kolophonium-ähnliches Harz umfasst. Die mit einer solchen Überzugsmasse versehenen Befestigungsmittel sollen gegenüber unbeschichteten Befestigungsmittel erhöhte Ausziehwerte zeigen.

Weiterhin ist aus der DE 40 28 133 C1 ein beschichtetes metallisches Befestigungselement bekannt, welches für den Einsatz im Holzbau mit einer thermoplastischen, überwiegend aliphatischen Polyurethanbeschichtung im Wesentlichen vollständig beschichtet ist. Weiterhin ist offenbart, dass das metallische Befestigungselement eine Zinkschicht sowie eine Chromatumwandlungsschicht zur Steigerung der Korrosionsresistenz aufweisen kann. Mit Hilfe der thermoplastischen Polyurethanbeschichtung sollen auch hier die Ausziehwerte gegenüber unbeschichteten Nägeln verbessert werden.

Die DE 694 22 797 T2 offenbart ein Befestigungsmittel, wie eine Klammer oder einen Nagel, welches mit einer Beschichtung bedeckt ist, wobei die Beschichtung einhundertprozentig aus Feststoffen besteht und die Haltekraft des Befestigungsmittels steigert, nachdem es in eine gewünschte Oberfläche eingetrieben ist.

Die vorgenannten Lösungen sind nicht in jeder Hinsicht befriedigend. So kann es trotz Verwendung von mit derartigen Massen beschichteten Nägeln zum Lösen damit erstellter Verbindungen kommen.

Ausgehend hiervon bestand die der vorliegenden Erfindung zugrundeliegende Aufgabe darin, ein Befestigungsmittel der eingangs genannten Art mit verbesserten Ausziehwerten zu schaffen.

Diese Aufgabe wird gelöst durch einen Nagel oder eine Nagelschraube, wobei das Befestigungsmittel mit einer Beschichtungszusammensetzung enthaltend ein polymeres Bindemittel zumindest teilweise beschichtet ist und die dadurch gekennzeichnet ist, dass die Beschichtungszusammensetzung Füllkörper enthält.

Die Erfindung betrifft des Weiteren eine Beschichtungszusammensetzung für ein Befestigungsmittel, ausgewählt aus einem Nagel oder einer Nagelschraube, wobei die Zusammensetzung ein polymeres Bindemittel enthält und die dadurch gekennzeichnet ist, dass diese zudem Füllkörper enthält. Die Zusammensetzung kann darüber hinaus sämtliche Ausgestaltungen annehmen, wie Sie vorstehend zum Befestigungsmittel erläutert sind.

Ein weiterer Gegenstand der vorliegenden Erfindung betrifft die Verwendung einer erfindungsgemäßen Zusammensetzung zum wenigstens teilweisen Beschichten eines Befestigungsmittels, insbesondere zur Erhöhung des Ausziehwertes des Befestigungsmittels.

Bei den Entwicklungsarbeiten, die zu der vorliegenden Erfindung geführt haben, hat sich herausgestellt, dass überraschenderweise durch Verwendung von Füllkörpern die Ausziehwerte damit beschichteter Befestigungsmittel gegenüber ungefüllten Beschichtungszusammensetzungen verbessert werden.

Gemäß einer besonders bevorzugten Ausführungsform der Erfindung enthält die Beschichtungszusammensetzung 2 bis 80 Vol.-% an Füllkörpern bezogen auf die Einsatzmenge an Füllkörpern enthält, insbesondere 5 bis 70 Vol .-%, vorzugsweise 7 bis 60 Vol.-%. Es hat sich herausgestellt, dass sich Zusammensetzungen mit derartigen Gehalten an Füllkörpern in besonders vorteilhafter Weise auf die Erhöhung der Ausziehwerte der mit solchen Zusammensetzungen beschichteten Befestigungsmittel auswirken. So setzt dieser Effekt bereits bei verhältnismäßig geringen Anteilen der vorgenannten Füllkörper ein und verstärkt sich mit zunehmender Füllstoffmenge.

Die vorgenannten Füllkörpergehalte betreffen den Volumenanteil an Füllkörpern in Form des Schüttvolumens, bevor dieser beispielsweise mit einer flüssigen Bindemittelzusammensetzung gemischt wird. Da bei diesem Mischvorgang die flüssige Bindemittelzusammensetzung in die Hohlräume zwischen den lose geschütteten Füllkörpern eindringt und das dortige Luftvolumen ersetzt, kann beispielsweise aus 100 ml Füllkörpern und 50 ml flüssiger Bindemittelzusammensetzung etwas mehr als 100 ml Beschichtungszusammensetzung entstehen.

Für die erfindungsgemäße Zusammensetzung können sphärische oder hemisphärische Füllkörper (für einen Nagel) oder faserartige Füllkörper (für eine Nagelschraube) verwendet werden.

Was die Größen der verwendeten Füllkörper betrifft, so beträgt der mittlere Durchmesser der partikulären bzw. schichtartigen Füllkörper 1 bis 500 µm, insbesondere 5 bis 300 µm, vorzugsweise 10 bis 100 µm. Der mittlere Durchmesser lässt sich beispielsweise über elektronenmikroskopische Aufnahmen ermitteln, indem der Mittelwert aus wenigstens 100 Füllkörperdurchmessern gebildet wird.

Die Füllkörper für einen Nagel können eine sphärische oder hemisphärische Form besitzen. In diesem Fall sind Mikrokugeln, offene oder geschlossene Mikrohohlkugeln sowie Mischungen hiervon bevorzugt. Hiervon kommen insbesondere keramische Mikrokugeln, Kunststoff- Mikrokugeln oder Glas- Mikrokugeln sowie die jeweiligen Mikrohohlkugeln in Frage.

Wie bereits oben ausgeführt, können die erfindungsgemäß eingesetzten Füllkörper auch faserartig ausgeprägt sein. Diese besitzen in vorteilhafter Ausgestaltung einen mittleren Durchmesser von 5 bis 300 µm und eine Länge von 50 bis 3.000 µm. Ebenfalls geeignet sind Fasern mit einem mittleren Durchmesser von 10 bis 250 µm, 15 bis 180 µm oder 20 bis 170 µm. Die Länge der Fasern kann vorzugsweise im Bereich zwischen 80 und 2.000 µm, insbesondere zwischen 100 und 1.800 µm liegen.

Erfindungsgemäß können beispielsweise Naturfasern, insbesondere Baumwoll-, Hanf-, Flachs, Jute- oder Sisalfasern, Kohlefasern, gemahlene Kohlefasern, Kunststofffasern wie Polyamid-, Polyester-, Polyacrylnitril-, Polypropylen-, Polyvinylalkohol-, Aramid- oder Polyesterfasern, Viskosefasern, Glasfasern, gemahlene Glasfasern, Mineralfasern oder deren Mischungen eingesetzt werden. Die vorbezeichneten gemahlenen Fasern haben beispielsweise eine Faserlänge von etwa 50 oder 60 µm.

Es versteht sich bei den oben genannten Durchmessern und Längenangaben von selbst, dass der Durchmesser grundsätzlich geringer als die Länge der Fasern ist, wobei vorzugsweise das Aspektverhältnis, also das Verhältnis von Länge zu mittlerem Durchmesser der faserartigen Füllkörper wenigstens 2:1, insbesondere wenigstens 5:1 beträgt.

Was das erfindungsgemäß eingesetzten polymere Bindemittel betrifft, so kommen hierfür im Prinzip sämtliche polymeren Bindemittel in Frage, die sich zur Beschichtung von Befestigungsmitteln eignen. Dies sind insbesondere solche, die eine gute Adhäsion zu Metalloberflächen aufweisen. So können die im Rahmen der vorliegenden Erfindung eingesetzten polymeren Bindemittel ausgewählt sein aus Polyacrylaten, Polyvenylchloriden, Polyurethanen, Polyamiden, Polyestern, Alkydharzen, Polyvinylacetaten, Polybutadienstyrolen, Polyvinylidenen, Polychloroprenen, Kautschuken, Maleinaten, Polyolefinen, Epoxiden, Silikonen, silanterminierten Polymeren, wie silanterminierten Polyurethanen, Polyamiden und Polyoxyalkylenen, sowie deren Co- und Terpolymeren oder Mischungen von diesen.

Neben dem polymeren Bindemittel kann die erfindungsgemäße Zusammensetzung ferner ein Lösungsmittel enthalten. Hierfür kommen beispielsweise Wasser oder ein organisches Lösungsmittel wie Aceton, Methyl-Ethyl-Keton, Ethylacetat, aromatische Kohlenwasserstoffe wie Toluol oder Xylol, aliphatische Kohlenwasserstoffe wie Hexan oder Heptan, halogenierte Kohlenwasserstoffe, oder Mischungen von diesen in Frage.

Es ist jedoch auch ebenso möglich, dass die erfindungsgemäße Zusammensetzung keinerlei Lösungsmittel enthält, sondern das polymere Bindemittel ein Reaktivsystem darstellt. Hierfür kommen beispielsweise Cyanacrylate oder Silikon- bzw. Silian-Präpolymere in Frage sowie auch 1-K oder 2-K Polyurethan-Vorstufen oder auch andere Mischungen, welche durch eine Polymerisationsreaktion die eingangs genannten polymeren Bindemittel ergeben.

Weiterhin kann vorgesehen sein, dass die erfindungsgemäße Zusammensetzung mindestens ein Additiv enthält. Dieses kann ausgewählt sein aus Tackifiern, Haftvermittlern, Weichmachern, Korrosionsinhibitoren, Stabilisatoren, Dispergierhilfen, Farbstoffen, Pigmenten oder Mischungen von diesen. Insbesondere vorteilhaft ist von den vorgenannten Additiven der Einsatz von Tackifiern, beispielsweise in Form von klebrig machenden Harzen wie Kolophonium oder Kolophoniumderivaten. Der Vorteil besteht darin, dass die Tackifier die Klebrigkeit und die Kohäsion der erfindungsgemäßen Zusammensetzung verbessern und dadurch die in der Zusammensetzung enthaltenen Füllkörper beim Eintreiben des Befestigungsmittels in ein Substrat fester auf der Oberfläche des Befestigungsmittels verankern.

Überraschenderweise hat sich herausgestellt, dass sich die Ausziehwerte bestimmter Typen von Befestigungsmitteln durch bestimmte Arten von Füllkörpern in besonders vorteilhafter Weise steigern lassen. Vorteilhaft ist es jedoch in jedem Fall, dass wenn das Befestigungsmittel einen Schaft aufweist, die Beschichtungszusammensetzung im Bereich des Schaftes aufgebracht ist.

So können die Ausziehwerte von Nägeln speziell durch sphärische oder hemisphärische Füllkörper in besonderer Weise gesteigert werden. Bevorzugte Ausführungsformen des erfindungsgemäßen Befestigungsmittels besteht demnach darin, dass das Befestigungsmittel ein Nagel ist und die Füllkörper zumindest teilweise eine sphärische oder hemisphärische Form aufweisen und insbesondere ausgewählt sind aus Kunststoff-Mikrohohlkugeln, Kunststoff-Mikrokugeln, Glas-Mikrohohlkugeln, Glas-Mikrokugeln, keramischen Mikrokugeln oder keramischen Mikrohohlkugeln oder aus Mischungen von diesen, wobei die Zusammensetzung vorzugsweise im Bereich des Nagelschaftes aufgebracht ist.

Im Unterschied hierzu haben sich faserartige Füllkörper als besonders vorteilhaft zur Beschichtung von Nagelschrauben herausgestellt. Insofern besteht eine weitere besonders bevorzugte Ausführungsform des erfindungsgemäßen Befestigungsmittels darin, dass dieses eine Nagelschraube ist und die Füllkörper zumindest teilweise faserartig sind, wobei die Zusammensetzung vorzugsweise im Bereich des Schaftes der Nagelschraube aufgebracht ist, insbesondere im Gewindebereich.

Die vorliegende Erfindung wird im Folgenden anhand mehrerer Ausführungsbeispiele genauer erläutert.

### Verwendete Materialien:

### Polymeres Bindemittel ST-2313:

In den im Folgenden dargestellten einzelnen Beispielen wurde jeweils ein kommerziell erhältlicher Grundlack ST-2313 "yellow nail coating concentrate", erhältlich bei UPACO Adhesives division, WORTHEN Industries, Inc. als polymeres Bindemittel verwendet. Dieser Lack hat die folgende Zusammensetzung:

| Inhaltsstoff | CAS # | EINECS No. | Konzentration % |
|---|---|---|---|
| Acetone | 67-64-1 | 200-622-2 | 60.0-70.0 |
| Acryl copolymer | Proprietary | Polymer | 20.0-25.0 |
| Tackifying Resin* | Proprietary | -- | 5.0-10.0 |
| Phenol, styrenated | 61788-44-1 | 262-975-0 | 3.0-5.0 |
| C.I. Solvent Yellow 14 | 842-07-9 | 212-668-2 | 0.5-1.0 |
| Adhesion promoter | Proprietary | -- | 0.1-2.0 |

Bei diesem Lack handelt es sich um ein Konzentrat, welches vor der Anwendung mit bei den jeweiligen Beispielen angegebenen Mengen an Aceton verdünnt wurde.

Bei "Beck-blau" handelt es sich um einen blauen Farbstoff (Ciba Spezialitätenchemie Lampertheim GmbH), der den damit gekennzeichneten Zusammensetzungen in einer Menge von 10 Vol.-% zugesetzt wurde.

### Verwendete Füllkörper:

### Glaskugeln:

Bei den Glaskugeln handelte es sich um Mikroglaskugeln mit der Produktbezeichnung Antirutsch-Einstreu-Substrat, Typ SP-19, bacuplast Faserverbundtechnik GmbH, also Vollkugeln. Der mittlere Kugeldurchmesser beträgt 300 µm.

### Fugensand:

Der verwendete Fugensand ist ein Quarzsand von Bayer. Der mittlere Korndurchmesser beträgt etwa 200 µm.

### Glasfasern:

Die eingesetzten Glasfasern haben eine durchschnittliche Länge von 1.500 µm und einen durchschnittlichen Faserdurchmesser von 150 µm und sind unter der Produktbezeichnung Glasfasern pulverisiert, bacuplast Faserverbundtechnik GmbH zu beziehen.

### Glashohlkugeln:

Bei den Glashohlkugeln handelte es sich um Mikroglashohlkugeln mit der Produktbezeichnung Microballoons Q-21, bacuplast Faserverbundtechnik GmbH, also Hohlkugeln. Der mittlere Kugeldurchmesser beträgt 150 µm.

### Kohlefasern:

Die eingesetzten Kohlefasern haben eine durchschnittliche Länge von 60 µm und einen durchschnittlichen Faserdurchmesser von 67 tex und sind unter der Produktbezeichnung Tenax®-A HAT M100, Toho Tenax Europe GmbH zu beziehen.

### Glasfasern gemahlen:

Die eingesetzten Glasfasern haben eine durchschnittliche Länge von 50 µm und einen durchschnittlichen Faserdurchmesser von 14 µm und sind unter der Produktbezeichnung MF 7904, Lanxess Central Eastern Europe s.r.o. zu beziehen.

### Baumwollfasern:

Bei den Fasern handelte es sich um Baumwollfasern mit der Produktbezeichnung Baumwollflocken, bacuplast Faserverbundtechnik GmbH. Die mittlere Faserlänge beträgt 2 mm.

### Verwendete Befestigungsmittel:

31/82 bk = Blanknagel, Durchmesser 3,1 mm, Schaftlänge 82 mm 31/75 bk = Blanknagel, Durchmesser 3,1 mm, Schaftlänge 75 mm Scrail 28/32x75 = Nagelschraube, Kerndurchmesser 2,8 mm, Außendurchmesser 3,2 mm, Schaftlänge 75 mm Sub-Lock® Scrail 28/32 x 75 = Maße wie Scrail 28/32x75, Firma Raimund Beck Nageltechnik GmbH, mit einem herkömmlichen Nagelharz ohne Füllkörper beschichtete Nagelschraube Spax Schraube 4,0 x 70 = handelsübliche Holz-Schraube

### Verwendete Holzsubstrate:

Fichte: mit einer charakteristischen Dichte von 350kg/m³ und einer relativen Feuchtigkeit von 65% bei 20°C Umgebungstemperatur gemäß DIN EN 14592

ACQ: Hierbei handelt es sich um Alkaline copper quaternary druckimprägniertes Southern yellow pine-Holz, wie es in den USA typischerweise für Auszugtests verwendet wird.

### Referenzwertbestimmung:

Aufgrund der auch bei ein und derselben Holzart auftretenden starken Streuung der Ausziehwerte wurde bei jeder Probe zunächst ein Referenzwert ermittelt, der die Festigkeit der Holzprobe widerspiegelt. Hierzu wurde ein blanker glattschaftiger Nagel mit dem Durchmesser 3,1 mm x 59 mm in die Proben eingetrieben. 24 Stunden danach wurden die Referenznägel ausgezogen. Die Werte der einzelnen Proben spiegeln damit die holzabhängige Streuung wieder, unter deren Berücksichtigung die Proben miteinander verglichen wurden.

### Herstellung der Beschichtungszusammensetzung:

Es wurden verschiedene Beschichtungen jeweils ausgehend vom Grundlack ST-2313 erzeugt. Hierzu wurde zunächst das Lackkonzentrat ST-2313 vorgelegt und mit jeweils angegebenen Mengen an Aceton versetzt und bis zur Homogenität gerührt. Die Mengenangaben beziehen sich jeweils auf das Mischungsverhältnis von Aceton zu Lackkonzentrat. Die mit "Beck-blau" gekennzeichneten Zusammensetzungen wurden zudem noch einem blauen Farbstoff versetzt.

Bei den Beschichtungszusammensetzungen, die bereits vor dem Auftragen Füllkörper enthalten, wurden in einem Gefäß zunächst die jeweiligen Füllkörper in angegebener Menge vorgelegt. Sofern keine anderen Mengenverhältnisse angegeben sind wurde anschließend so viel polymeres Bindemittel hinzugegeben, das dieses die Füllhöhe der Füllkörper erreicht, also im Prinzip die Zwischenräume der lose geschütteten Füllkörper auffüllt.

### Volumenverhältnis:

100ml Glaskugeln
45ml Coating ST2313 mit 2:1 Acetonverdünnung
100ml Glasfasern
55ml Coating ST 2313 mit 2:1 Acetonverdünnung

### Aufbringen der Beschichtung:

Der Beschichtungsschritt erfolgte entweder mit Hilfe einer Beschichtungsmaschine oder von Hand durch Eintauchen des jeweiligen Befestigungsmittels in die Beschichtungszusammensetzung.

Die nach beiden Auftragsmethoden hergestellten beschichteten Befestigungsmittel wurden anschließend bei Raumtemperatur getrocknet.

### Testmethoden:

Die Bestimmung des Ausziehwertes wurde gemäß der Vorschrift DIN 1052 vom August 2004, speziell gemäß den Vorschriften im Anhang C vorgenommen.

Bei den in den folgenden Tabellen zusammengestellten Versuchsergebnissen werden unterschiedliche Befestigungsmittel (BFM) mit verschiedenen Beschichtungszusammensetzungen gemäß der oben genannten Methoden versehen und dessen Ausziehwert 24h nach dem Eintreiben geprüft, wobei die angegebenen Werte Durchschnittswerte von jeweils 10 Versuchen gemäß der oben genannten DIN 1052 darstellen.

Die Proben wurden in einer gleichmäßigen Verteilung über dem Probenholz/ den Probenhölzern mit einem pneumatischen Setzgerät eingetrieben. Nach 24 Stunden wurden die Befestigungsmittel nacheinander mit einer geeichten Zug/Druck-Prüfmaschine aus dem Holz herausgezogen. Der hierbei erreichte maximale Wert entspricht der Ausziehkraft.

Die Ergebnisse stellen sich wie folgt dar:

| Holz | Eintreibtiefe | BFM | Beschichtung | Coating | Verhältnis Aceton : Coating | Füllkörper | Ausziehwert /kp | Referenzwert /kp |
|---|---|---|---|---|---|---|---|---|
| Fichte | 60 | 31/82bk | Maschine | ST2313 | 2:1 | | 126 | 75 |
| Fichte | 60 | 31/82bk | Hand | Beck-blau | 3:1 | | 129 | 75 |
| Fichte | 55 | 31/75bk | Hand | ST2313 | 2:1 | Glaskugel | 321 | 74 |
| Fichte | 55 | 31/75bk | Hand | ST2313 | 2:1 | | 276 | 74 |
| Fichte | 55 | Scrail28/32x75 | Hand | ST2313 | 2:1 | Glasfaser | 294 | 74 |
| Fichte | 55 | Scrai128/32x75 | Hand | ST2313 | 2:1 | | 267 | 74 |
| Fichte | 35 | Scrail28/32x57 | Hand | ST2313 | 2:1 | Glasfaser | 152 | 63 |
| Fichte | 35 | Scrail28/32x57 | Maschine | Beck-blau | 2:1 | | 124 | 63 |
| Fichte | 40 | Scrail28/32x57 | Hand | ST2313 | 2:1 | Glasfaser | 167 | 81 |
| Fichte | 40 | Scrail28/32x57 | Maschine | Beck-blau | 2:1 | | 146 | 81 |
| Fichte | 40 | Scrail28/32x57 | Hand | ST1735 | 3:1 | Glasfaser | 149 | 81 |
| Fichte | 40 | Scrail28/32x57 | Maschine | Beck-blau | 2:1 | | 146 | 81 |
| ACQ | 40 | Scrail28/32x57 | Hand | ST2313 | 2:1 | Glasfaser | 208 | 50 |
| ACQ | 40 | Scrail28/32x57 | Maschine | Beck-blau | 2:1 | | 186 | 50 |
| ACQ | 40 | Scrail28/32x57 | Hand | ST1735 | 3:1 | Glasfaser | 186 | 50 |
| ACQ | 40 | Scrail28/32x57 | Maschine | Beck-blau | 2:1 | | 186 | 50 |
| ACQ | 35 | Scrail28/32x57 | Hand | ST2313 | 2:1 | Glasfaser | 215 | 58 |
| ACQ | 35 | Scrail28/32x57 | Maschine | Beck-blau | 2:1 | | 190 | 58 |

Bei den hier aufgeführten Beschichtungen wurden die angegebenen Füllkörper jeweils vor dem Auftragen mit dem polymeren Bindemittel vermischt.

| Holz | Eintreibtiefe | BFM | Beschichtung | Coating | Verhältnis Aceton : Coating | Füllkörper | Ausziehwert /kp | Referenzwert /kp |
|---|---|---|---|---|---|---|---|---|
| Fichte | 35 | Scrail28/32x57 | Maschine | Beck-blau | 2:1 | | 124 | 63 |
| Fichte | 35 | Scrail28/32x57 | Hand | ST2313 | 2:1 | Glasfaser | 152 | 63 |
| ACQ | 35 | Scrail28/32x57 | Maschine | Beck-blau | 2:1 | | 190 | 58 |
| ACQ | 35 | Scrail28/32x57 | Hand | ST2313 | 2:1 | Glasfaser | 215 | 58 |
| Fichte | 40 | Scrail28/32x57 | Maschine | Beck-blau | 2:1 | | 146 | 81 |
| Fichte | 40 | Scrail28/32x57 | Maschine | Beck-blau | 2:1 | | 146 | 81 |
| Fichte | 40 | Scrail28/32x57 | Hand | ST1735 | 3:1 | Glasfaser | 149 | 81 |
| Fichte | 40 | Scrail28/32x57 | Hand | ST2313 | 2:1 | Glasfaser | 167 | 81 |
| ACQ | 40 | Scrail28/32x57 | Maschine | Beck-blau | 2:1 | | 186 | 50 |
| ACQ | 40 | Scrail28/32x57 | Hand | ST1735 | 3:1 | Glasfaser | 186 | 50 |
| ACQ | 40 | Scrail28/32x57 | Maschine | Beck-blau | 2:1 | | 186 | 50 |
| ACQ | 40 | Scrail28/32x57 | Hand | ST2313 | 2:1 | Glasfaser | 208 | 50 |
| Fichte | 55 | Scrail28/32x75 | Hand | ST2313 | 2:1 | | 267 | 74 |
| Fichte | 55 | Scrail28/32x75 | Hand | ST2313 | 2:1 | Glasfaser | 294 | 74 |

Bei den hier aufgeführten Beschichtungen wurden die angegebenen Füllkörper jeweils vor dem Auftragen mit dem polymeren Bindemittel vermischt. Die mit Glasfasern gefüllte Beschichtungszusammensetzung führte bei allen Eintreibtiefen zu einer Steigerung der Ausziehwerte um etwa 10 bis 14%.

### Fichte:

### Referenzwert des Holzes: 74,1 kp

| **Benennung** | **Ausziehwert in kp** |
|---|---|
| RN 31/75 glatt blank ST 2313 Verhältnis Aceton: Bindemittel 2:1 | **276,2** |
| RN 31/75 glatt blank ST 2313 Verhältnis Aceton: Bindemittel 2:1 mit Glaskugeln bestreut | **248,7** |
| RN 31/75 glatt blank ST 2313 Verhältnis Aceton: Bindemittel 2:1 mit Glaskugeln gemischt ca. 30% Volumenanteil | **284,9** |
| Scrail 28/32 x 75 ST 2313 Verhältnis Aceton: Bindemittel 2:1 | **267,2** |
| Scrail 28/32 x 75 ST 2313 Verhältnis Aceton: Bindemittel 2:1 mit Glaskugeln bestreut | **258,6** |
| Scrail 28/32 x 75 ST 2313 Verhältnis Aceton: Bindemittel 2:1 mit Glaskugeln gemischt ca. 30% Volumenanteil | **268,0** |
| RN 31/75 glatt blank ST 2313 Verhältnis Aceton: Bindemittel 2:1 mit Glaskugeln gemischt | **321,7** |
| Scrail 28/32 x 75 ST 2313 Verhältnis Aceton: Bindemittel 2:1 mit Glaskugeln gemischt | **271,9** |
| RN 31/75 glatt blank ST 2313 Verhältnis Aceton: Bindemittel 2:1 mit Glasfasern gemischt | **267,8** |
| Scrail 28/32 x 75 ST 2313 Verhältnis Aceton: Bindemittel 2:1 mit Glasfasern gemischt | **293,8** |

Eintreibtiefe jeweils 55 mm, Zeitdifferenz zwischen Eintreiben und Ausziehen betrug jeweils 24h.

### Fichte:

### Referenzwert des Holzes: 88,0 kp

| **Benennung** | **Ausziehwert in kp** |
|---|---|
| RN 31/75 glatt blank ST 2313 Verhältnis Aceton: Bindemittel 2:1 | **273,1** |
| RN 31/75 glatt blank ST 2313 Verhältnis Aceton: Bindemittel 2:1 mit Glaskugeln gemischt | **325,4** |
| RN 31/75 glatt blank ST 2313 Verhältnis Aceton: Bindemittel 2:1 mit Fugensand gemischt | **279,6** |
| Scrail 28/32 x 75 ST 2313 Verhältnis Aceton: Bindemittel 2:1 | **219,5** |
| Scrail 28/32 x 75 ST 2313 Verhältnis Aceton: Bindemittel 2:1 mit Glasfasern gemischt | **243,2** |
| Scrail 28/32 x 75 ST 2313 Verhältnis Aceton: Bindemittel 2:1 mit Fugensand gemischt | **209,0** |
| Sub-Lock Scrail 28/32 x 75 | **213,0** |
| Spax Schraube 4,0 x 70 Gewindelänge 45mm | **421,0** |
| Spax Schraube 3,5 x 50 Gewindelänge 30mm | **225,6** |

Eintreibtiefe jeweils 55 mm, Zeitdifferenz zwischen Eintreiben und Ausziehen betrug jeweils 24h.

### Fichte:

### Referenzwert des Holzes: 62,6 kp

| **Benennung** | **Ausziehwert in kp** |
|---|---|
| Sub-Lock Scrail 28/32 x 57 | **124,0** |
| Scrail 28/32 x 57 ST 2313 Verhältnis Aceton: Bindemittel 2:1 mit Glasfasern gemischt | **152,0** |

### ACQ:

### Referenzwert des Holzes: 57,5 kp

| **Benennung** | **Ausziehwert in kp** |
|---|---|
| Sub-Lock Scrail 28/32 x 57 | **190,3** |
| Scrail 28/32 x 57 ST 2313 Verhältnis Aceton: Bindemittel 2:1 mit Glasfasern gemischt | **214,5** |

### Fichte:

### Referenzwert des Holzes: 95,87 kp

Auch in den folgenden Zusammensetzungen wurde dasselbe Bindemittel ST 2313 im Verhältnis Aceton: Bindemittel 2:1 verwendet. Hierbei wurde das Mischungsverhältnis aber nicht bis zur Sättigung der Füllkörper aufgefüllt. Die Anteile wurden einzeln in den gewünschten Volumina abgemessen und dann zusammengegeben.

| **Benennung** | **Ausziehwert in kp** |
|---|---|
| Scrail 28/32 x 75 Kohlefaser Verhältnis Harz: Fasern 88g/8g | **271,8** |
| Scrail 28/32 x 75 Kohlefaser Verhältnis Harz: Fasern 88g/15g | **268,3** |
| Scrail 28/32 x 75 Kohlefaser Verhältnis Harz: Fasern 88g/30g | **278,5** |
| Scrail 28/32 x 75 Kohlefaser Verhältnis Harz: Fasern 88g/60g | **275,0** |
| Scrail 28/32 x 75 Kohlefaser Verhältnis Harz: Fasern 88g/70g (Sättigung) | **275,1** |
| Scrail 28/32 x 75 Baumwollfaser Verhältnis Harz: Fasern 88g/5g | **270,4** |
| Scrail 28/32 x 75 Baumwollfaser Verhältnis Harz: Fasern 88g/10g | **309,6** |
| Scrail 28/32 x 75 Baumwollfaser Verhältnis Harz: Fasern 88g/15g (Sättigung) | **300,2** |
| Scrail 28/32 x 75 ST2313 Verhältnis Harz: Fasern 2:1 | **228,9** |

Eintreibtiefe jeweils 60 mm, Zeitdifferenz zwischen Eintreiben und Ausziehen betrug jeweils 24h.

### Fichte:

### Referenzwert des Holzes: 55,84 kp

Auch in den folgenden Zusammensetzungen wurde dasselbe Bindemittel ST 2313 im Verhältnis Aceton: Bindemittel 2:1 verwendet

| **Benennung** | **Ausziehwert in kp** |
|---|---|
| RN 31/75 glatt ST 2313 Verhältnis Harz: Fasern 2:1 | **299,5** |
| RN 31/75 glatt Glashohlkugeln Verhältnis Harz: Fasern 88g/2g | **241,5** |
| Scrail 28/32 x 75 ST 2313 Verhältnis Harz: Fasern 2:1 | **200,1** |
| Scrail 28/32 x 75 Kohlefaser Verhältnis Harz: Fasern 88g/60g | **245,2** |
| Scrail 28/32 x 75 Glasfasern gemahlen Verhältnis Harz: Fasern 96g/60g | **209,2** |
| Scrail 28/32 x 75 Glasfasern gemahlen Verhältnis Harz: Fasern 96g/120g | **229,8** |
| Scrail 28/32 x 75 Glasfasern gemahlen Verhältnis Harz: Fasern 96g/180g (Sättigung) | **181,9** |

Eintreibtiefe jeweils 60 mm, Zeitdifferenz zwischen Eintreiben und Ausziehen betrug jeweils 24h.

Die tabellarisch zusammengefassten Beispiele zeigen, dass sich durch die Verwendung von Füllkörpern in Beschichtungszusammensetzungen die Ausziehwerte gegenüber unbeschichteten und nur mit ungefülltem Nagelharz beschichteten Befestigungsmitteln steigern lassen.

Die Ergebnisse zeigen den überraschenden Befund, dass sich die Ausziehwerte von Nägeln, insbesondere Glattnägeln ganz besonders durch Beschichtungszusammensetzungen steigern lassen, welche Mikroglaskugeln enthalten. Demgegenüber lässt sich bei Nagelschrauben und Schrauben deren Ausziehwert durch den Einsatz von faserartigen Füllkörpern in der Beschichtungszusammensetzung am deutlichsten verbessern.

## Patentansprüche

1. Befestigungsmittel, wobei das Befestigungsmittel mit einer Beschichtungszusammensetzung enthaltend ein polymeres Bindemittel zumindest teilweise beschichtet ist, wobei die Beschichtungszusammensetzung Füllkörper enthält, **dadurch gekennzeichnet, dass** das Befestigungsmittel ein Nagel ist und die Füllkörper zumindest teilweise eine sphärische oder hemisphärische Form aufweisen und insbesondere ausgewählt sind aus Kunststoff-Mikrohohlkugeln, Kunststoff-Mikrokugeln, Glas-Mikrohohlkugeln, Glas-Mikrokugeln, keramischen Mikrokugeln oder Mikrohohlkugeln oder aus Mischungen von diesen, wobei die Zusammensetzung vorzugsweise im Bereich des Nagelschaftes aufgebracht ist oder dass das Befestigungsmittel eine Nagelschraube ist und die Füllkörper zumindest teilweise faserartig sind, wobei die Zusammensetzung vorzugsweise im Bereich des Schaftes der Nagelschraube aufgebracht ist, insbesondere im Gewindebereich.

2. Befestigungsmittel nach Anspruch 1, **dadurch gekennzeichnet, dass** die Beschichtungszusammensetzung 2 bis 80 Vol.-% an Füllkörpern bezogen auf die Einsatzmenge an Füllkörpern enthält, insbesondere 5 bis 70 Vol .-%, vorzugsweise 7 bis 60 Vol.-%.

3. Befestigungsmittel nach Anspruch 1 oder 2, **dadurch gekennzeichnet, dass** die sphärische oder hemisphärische Form aufweisenden Füllkörper insbesondere einen mittleren Durchmesser von 1 bis 500 µm aufweisen, vorzugsweise von 5 bis 300 µm und die faserartigen Füllkörper insbesondere einen mittleren Durchmesser von 5 bis 300 µm und eine Länge von 50 bis 3.000 µm aufweisen und vorzugsweise ein Verhältnis von Länge zu mittlerem Durchmesser von 2 : 1 oder mehr besitzen, insbesondere von 5 : 1 oder mehr.

4. Befestigungsmittel nach einem der Ansprüche 3 bis 6, **dadurch gekennzeichnet, dass** die faserartigen Füllkörper ausgewählt sind aus Naturfasern, insbesondere Baumwoll-, Hanf-, Flachs, Jute- oder Sisalfasern, Kohlefasern, gemahlene Kohlefasern, Kunststofffasern wie Polyamid-, Polyester-, Polyacrylnitril-, Polypropylen-, Polyvinylalkohol-, Aramid- oder Polyesterfasern, Viskosefasern, Glasfasern, gemahlene Glasfasern, Mineralfasern oder deren Mischungen.

5. Befestigungsmittel nach einem der vorstehenden Ansprüche, **dadurch gekennzeichnet, dass** das polymere Bindemittel ausgewählt ist aus Polyacrylaten, Polyvinylchloriden, Polyurethanen, Polyamiden, Polyestern, Alkydharzen, Polyvinylacetaten, Polybutadienstyrolen, Polyvinylidenen, Polychloroprenen, Kautschuken, Maleinaten, Polyolefinen, Epoxiden, Silikonen, silanterminierten Polymeren, wie silanterminierten Polyurethanen, Polyamiden und Polyoxyalkylenen, sowie deren Co- und Terpolymeren oder Mischungen von diesen.

6. Befestigungsmittel nach einem der vorstehenden Ansprüche, **dadurch gekennzeichnet, dass** die Zusammensetzung ein Lösungsmittel enthält, insbesondere Wasser oder ein organisches Lösungsmittel wie Aceton, Methyl-Ethyl-Keton, Ethylacetat, aromatische Kohlenwasserstoffe wie Toluol oder Xylol, aliphatische Kohlenwasserstoffe wie Hexan, halogenierte Kohlenwasserstoffe, oder Mischungen von diesen.

7. Befestigungsmittel nach einem der vorstehenden Ansprüche, **dadurch gekennzeichnet, dass** die Zusammensetzung zumindest ein Additiv enthält, ausgewählt aus der Gruppe enthaltend Tackifier, Haftvermittler, Weichmacher, Korrosionsinhibitoren, Stabilisatoren, Dispergierhilfen, Farbstoffe, Pigmente oder Mischungen von diesen..

8. Befestigungsmittel nach einem der vorstehenden Ansprüche, **dadurch gekennzeichnet, dass** das Befestigungsmittel einen Schaft aufweist und die Beschichtungszusammensetzung im Bereich des Schaftes aufgebracht ist.

9. Verwendung einer Zusammensetzung wie in Anspruch 1 definiert ist zum wenigstens teilweisen Beschichten eines Befestigungsmittels, insbesondere zur Erhöhung des Ausziehwertes des Befestigungsmittels.

## Claims

1. A fastening means, the fastening means being coated at least partially with a coating composition containing a polymer bonding agent, wherein the coating composition contains filling material, **characterized in that** the fastening means is a nail and the filling materials are at least partially spherical or hemispherical in form, and in particular are chosen from hollow plastic microspheres, plastic microspheres, hollow glass microspheres, glass microspheres, ceramic microspheres or hollow microspheres or from mixtures of the latter, the composition preferably being applied in the region of the shaft of the nail or the fastening means is a nail-screw and the filling materials are at least partially like fibres, the composition preferably being applied in the region of the shaft of the nail-screw, in particular in the region of the thread.

2. The fastening means according to Claim 1, **characterised in that** the coating composition contains 2 to 80 % by volume of filling materials in relation to the quantity of filling materials used, in particular 5 to 70 % by volume, preferably 7 to 60 % by volume.

3. The fastening means according to Claim 1 or 2, **characterised in that** the spherical or hemispherical type filling material having in particular an average diameter of 1 to 500 µm, preferably 5 to 300 µm, and the fibre-type filling materials having in particular an average diameter of 5 to 300 µm and a length of 50 to 3,000 µm and preferably having a ratio of length to average diameter of 2 : 1 or more, in particular of 5 : 1 or more.

4. The fastening means according to any of Claims 1 to 3, **characterised in that** the fibre-type filling materials are chosen from natural fibres, in particular cotton, hemp, flax, jute or sisal fibres, carbon fibres, milled carbon fibres, plastic fibres such as polyamid, polyester, polyacrylonitrile, polypropylene, polyvinyl alcohol, aramid or polyester fibres, viscose fibres, glass fibres, milled glass fibres, mineral fibres or mixtures of the latter.

5. The fastening means according to any of the preceding claims, **characterised in that** the polymer bonding agent is chosen from polyacrylates, polyvinyl chlorides, polyurethanes, polyamides, polyesters, alkyd resins, polyvinyl acetates, polybutadiene styrenes, polyvinylidenes, polychloroprenes, rubbers, maleinates, polyolefins, epoxides, silicones, silane-terminated polymers, such as silane-terminated polyurethanes, polyamides and polyoxyalkylenes, and the co- and terpolymers of the latter or mixtures of the latter.

6. The fastening means according to any of the preceding claims, **characterised in that** the composition contains a solvent, in particular water or an organic solvent such as acetone, methyl-ethyl-ketone, ethyl acetate, aromatic hydrocarbons such as toluene or xylene, aliphatic hydrocarbons such as hexane, halogenated hydrocarbons or mixtures of the latter.

7. The fastening means according to any of the preceding claims, **characterised in that** the composition contains at least one additive chosen from the group containing tackifiers, adhesive agents, softeners, corrosion inhibitors, stabilisers, dispersion aids, dyes, pigments or mixtures of the latter.

8. The fastening means according to any of the preceding claims, **characterised in that** the fastening means has a shaft and the coating composition is applied in the region of the shaft.

9. The use of a composition as defined in Claim 2 for at least partially coating a fastening means, in particular for increasing the pull-out value of the fastening means

## Revendications

1. Un moyen de fixation,
le moyen de fixation étant au moins partiellement enduit d'une composition d'enduit contenant un agent liant polymère, la composition d'enduit contenant des structures de remplissage, **caractérisé en ce que** le moyen de fixation est un clou et les structures de remplissage ont au moins partiellement une forme sphérique ou hémisphérique et sont notamment choisies parmi des microsphères creuses plastiques, microsphères plastiques, microsphères creuses en verre, microsphères en verre, microsphères en céramique ou microsphères creuses ou leurs mélanges, dans lequel la composition est appliqué de préférence sur la zone de la tige du clou, ou **en ce que** le moyen de fixation est un vis et les structures de remplissage sont au moins partiellement fibreuses, dans lequel le mélange est appliqué de préférence sur la zone de la tige du vis, notamment sur la zone du filetage.

2. Le moyen de fixation selon la revendication 1, **caractérisé en ce que** 2 à 80 % du volume du mélange d'enduit correspond à la structure de remplissage par rapport à la quantité utilisée des structures de remplissage, notamment 5 à 70 % du volume, de préférence 7 à 60% du volume.

3. Le moyen de fixation selon les revendications 1 ou 2, **caractérisé en ce que** les structures de remplissage ayant une forme sphérique ou hémisphérique comprennent notamment un diamètre moyenne de 1 à 500 µm, de préférence de 5 à 300 µm et les structures de remplissage fibreuses comprennent notamment un diamètre moyenne de 5 à 300 µm et une longueur de 50 à 3 000 µm et possèdent de préférence un rapport de longueur à un diamètre moyenne de 2:1 ou plus, notamment de 5:1 ou plus.

4. Le moyen de fixation selon une des revendications 3 ou 6, **caractérisé en ce que** les structures de remplissage fibreuses sont choisies parmi des fibres naturelles, notamment des fibres de coton, des fibres de chanvre, du lin, des fibres de jute ou des fibres de sisal, des fibres de carbone, des fibres de carbone broyées, des fibres plastiques telles que les fibres de polyamide, des fibres de polyester, des fibres de polyacrylonitrile, des fibres de polypropylène, des fibres d'alcool polyvinylique, des fibres d'aramide ou des fibres de polyester, des fibres de viscose, des fibres en verre, des fibres en verre broyées, des fibres minérales ou leurs mélanges.

5. Le moyen de fixation selon une des revendications précédentes, **caractérisé en ce que** l'agent liant polymère est choisi parmi des polyacrylates, des polychlorure de vinyle, des polyuréthanes, des polyamides, des polyesters, des résines alkydes, des acétates de polyvinyle, des styrènes polybutadiènes, des polyvinylidenes, des polychloroprènes, du caoutchouc, des maleinates, des polyoléfines, des époxydes, des silicones, des polymères modifiés silane tels que les polyuréthanes modifiés silane, des polyamides et des polyoxyalkylènes, de même que leurs copolymères et terpolymères résultants ou leurs mélanges.

6. Le moyen de fixation selon une des revendications précédentes, **caractérisé en ce que** le mélange contient un solvant, notamment de l'eau ou un solvant organique comme l'acétone, le méthyléthylcétone, l'acétate d'éthyle, des hydrocarbures aromatiques comme le toluène ou le xylène, des hydrocarbures aliphatiques comme l'hexane, des hydrocarbures halogénés ou leurs mélanges.

7. Le moyen de fixation selon une des revendications précédentes, **caractérisé en ce que** le mélange contient au moins un additif, choisi parmi le groupe contenant des résines tackifiante, des adhésives, des adoucisseurs, des inhibiteurs de corrosion, des stabilisateurs, des auxiliaires de dispersion, des colorants, des pigments ou leurs mélanges.

8. Le moyen de fixation selon une des revendications précédentes, **caractérisé en ce que** le moyen de fixation comprend une tige et le mélange d'enduit est appliqué sur la zone de la tige.

9. L'utilisation d'un mélange tel que défini dans la revendication 1, pour enduire au moins partiellement un moyen de fixation, notamment pour augmenter la valeur de résistance à l'arrachement dudit moyen de fixation.
